# EUROPEAN PATENT SPECIFICATION

(11) **EP 3 849 139 B1**
(45) Date of publication and mention of the grant of the patent: **01.05.2024**
(21) Application number: 20211794.1
(22) Date of filing: 04.12.2020
(51) Int. Cl.: H04L 41/16

(54) **SUPPORT SERVICE MANAGEMENT SYSTEM OF MACHINE AND/OR PLANTS FOR WORKING WOODEN WORKPIECES AND OPERATION METHOD THEREOF.COMPRISING SAID MACHINE AND DEVICE**
SUPPORT SERVICE MANAGEMENT SYSTEM VON MASCHINEN UND / ODER ANLAGEN ZUM ARBEITEN VON HOLZARTIKEL UND BETRIEBSVERFAHREN
SYSTÈME DE GESTION DE SERVICES DE SUPPORT DE MACHINE ET / OU INSTALLATIONS POUR TRAVAILLER DES PIÈCES À TRAVAIL EN BOIS ET PROCÉDÉ DE FONCTIONNEMENT DE CES MACHINES ET DISPOSITIFS

(30) Priority: 19.12.2019 IT 201900024760
(43) Date of publication of application: 14.07.2021
(73) Proprietor: SCM Group S.p.A., 47921 Rimini (RN) (IT)
(72) Inventor: BELLATRECCIA, Dario, 47921 RIMINI (IT); CAIFFA, Luigi, 47921 RIMINI (IT); INGALDI, Carmine, 47921 RIMINI (IT)
(74) Representative: Tiburzi, Andrea

(56) References cited:
- EP-A1- 3 249 556
- JP-A- 2004 280 411
- US-A1- 2009 062 930

## Description

The present invention relates to a support service management system of machine and/or plants for working workpieces made of wood, glass, fiberglass, metal, ceramic, plastic, and the like.

The present invention also relates to an operation method of said system.

More specifically, the invention relates to a system of the aforementioned type, designed and realized in particular for the management of the assistance services of machines and/or plants for working wooden pieces, but which can be used for any assistance service, of which requires management and optimization.

In the following, the description will be directed to the machines and/or plants for machining of wooden pieces, but it is clear that the same should not be considered limited to this specific use.

As is well known, there are currently assistance services for customers associated with machines and/or systems for machining wooden pieces.

For ease of description, reference is made hereinafter to a machine for machining wooden pieces, but the description is also considered to be similar for a plant for processing wooden pieces.

The systems that allow the management of these assistance services currently consist of one or more remote control logic units, which can be physically located at a service center, one or more remote devices, operatively connected to said one or more logic units remote control, and at least one machine for working wooden pieces, located in a factory, which can be operatively connected to said one or more remote devices.

Each logic control unit comprises storage means and processing means.

Modifiable cards or formats are stored in the storage means, each one associated with a machine.

Each format comprises a plurality of data and information relating to the operation of a specific machine, which it is associated to, and a plurality of empty fields that can be filled in.

Typically, each mechanical or electronic component of the machine is associated with one or more malfunctions, which may occur on said component during the operation of the machine.

In case of breakdown or malfunction or anomaly of the machine, a user of the machine can access through a remote device to a logic control unit and fill in the form relating to the specific machine, to report the fault to the assistance service.

Typically, the user can fill in the blanks indicating the type of failure or malfunction, or indicate the electronic or mechanical component of the machine on which the failure occurred, and similar fill out methods.

Once the user completes the format, the assistance service receives the fault report.

It often occurs that the format is only partially filled in or in an incomprehensible language, or is filled in with terminology that is not suitable for identifying the fault.

This, therefore, causes a slowdown in the process of decoding the report by the assistance center.

It is evident that this current procedure is expensive in terms of considerable expenditure of time and resources of the assistance service to decode the fault report.

Furthermore, it is evident that if the user of the machine fails to resolve the malfunction in a short time, this will result in machine downtime which will cause production delays.

The relevant prior art also includes the patent applications US 2009/062930 A1, EP 3 249 556 A1 and JP 2004 280411 A.

In light of the above, it is, therefore, a scope of the present invention to provide a management system for the assistance services of machines and/or plants for processing wooden pieces that optimizes the process of decoding the malfunction signal, both in terms of time and resources used.

It is also an object of the present invention to provide the operation method of said system.

It is therefore specific object of the present invention a support service management system of machine and/or plants for working workpieces made of wood, glass, fiberglass, plastic, ceramic, metal, comprising at least one remote logic control unit comprising storage means, comprising a plurality of updatable operating data of said machine and/or plants as editable cards, and processing means of said data, at least one remote device, operatively connected with said at least one remote logic control unit, comprising displaying an interface means that can be used by a user to input data in at least one editable card, said processing means of said remote logic control unit may receive in input said at least one editable card, said processing means may comprise a processing data program that, on the basis of the amount of data input in said at least one editable card, send signals that can be displayed by said user on said displaying means of said at least one remote device for continuing or stopping the data input in said at least one editable card.

Further according to the invention, said processing data program calculates ranking values associated with the amount of data input in said at least one editable card, such as a tuple of values from 0 to 10, in which each value refers to a specific requirement relative to the compilation of said at least one editable card, and said signals, displayed on said interface means of said at least one remote device (D1), are associated with said ranking value.

Preferably according to the invention, said at least one editable card comprises a first list of data, in which each data is an only choice and a mutual exclusion, such as: Mechanical, Electronic, Electrical, Software, Other, a second list of data, in which each data is an only choice and a mutual exclusion, such as: main Operating Unit, secondary Operating Unit, Axis X, Axis Y, Axis Z, auxiliary systems, blocking piece systems, Other and at least one first editable frame in which a user inserts data in text format.

Still according to the invention, said at least one editable card (OIF) comprises at least one second frame in which a real-time translation of data inserted in said first frame is provided, in a predefined language.

Always according to the invention, said remote logic control unit is placed in said support service or it is in the cloud.

Further according to the invention, said at least one remote device can be connected to said machines and/or plants so that said user can modify its operation by means of said at least one remote device.

Preferably according to the invention, said system comprises software modules implemented in storage means readable and executable by a computer provided with input/output devices, implemented on physical and/or virtual calculation cluster and remotely executable and implemented as applications for mobile devices, such as tablet, smartphone and laptops.

It is further object of the present invention an operation method of a system comprising the following steps:
a. inserting data in at least one editable card (OIF);
b. calculating ranking values relative to the amount of data inserted in said step a.;
c. sending signals, corresponding to said ranking values, to a displaying unit;
d. if said signals displayed in said step c. correspond to ranking values lower than a specific threshold, then continuing the data input in said at least one editable card (OIF);
e. if said signals displayed in said step c. correspond to ranking values above a specific threshold, then stopping the data input in said at least one editable card (OIF).

Further according to the invention, said step a. comprises the following sub steps:
a.1. filling out a first list of data, in which each data is an only choice and a mutual exclusion, such as: Mechanical, Electronic, Electric, Software, Other;
a.2. filling out a second list of data, in which each data is an only choice and a mutual exclusion, such as: Main Operating Unit, Secondary Operating Unit, Axis X, Axis Y, Axis Z, auxiliary systems, blocking piece systems, Other; and
a.3 inserting data in text format in at least one first editable frame.

Always according to the invention, said step a. comprises the following sub step: a.4 providing the real-time translation, in a predefined language, of data inserted in said first frame in said step a.3, in at least one second frame.

The present invention will be now described, for illustrative but not limitative purposes, according to its preferred embodiments, with particular reference to the figures of the enclosed drawings, wherein:
figure 1 shows a schematic view of the management system for assistance services of machines and/or plants for machining wooden pieces, object of the present invention; and
figure 2 shows a block diagram of the operation method of the system shown in figure 1, object of the present invention.

In the various figures, similar parts will be indicated by the same reference numbers.

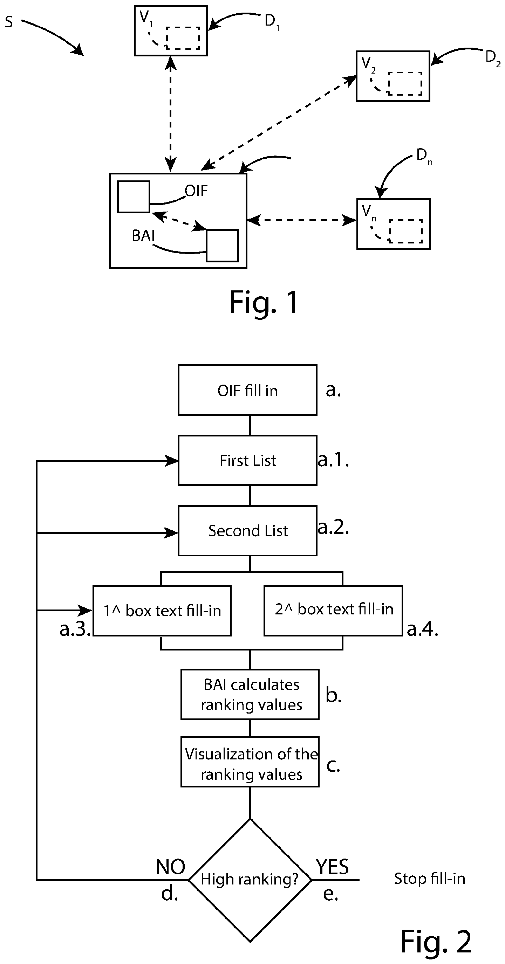

With reference to figure 1, the system S for managing assistance services for machines and/or plants for processing wooden pieces of the present invention essentially comprises at least one remote control logic unit U, and at least one remote device D1, operatively connected with said remote control logic unit U.

The remote devices D2,..., Dn, can also be a plurality, connected to said remote control logic unit.

Said remote control logic unit U is physically located at the assistance service of the machine and/or woodworking plant.

Alternatively, said remote control logic unit U can be in a cloud accessible to the assistance service.

Said logic control unit U comprises storage means and processing means.

All the technical data relating to a machine and also the possible failures or malfunctions that may occur, are stored in said storage means.

Said processing means comprise a data processing program.

This data processing program is of artificial intelligence - AI type.

In particular, said processing program can be of the neural network type.

Moreover, in said logic control unit U there are contained one or more formats or cards, called OIF - Open Issue Form, in which the data relating to each electrical, electronic, software, mechanical and other component of a given machine are contained.

Each OIF is associated with a machine or plant.

Each OIF includes a first list of data, in which each data is compulsory and mutually exclusive, such as: Mechanical, Electronic, Electrical, Software, Other and the like.

Each OIF also includes a second list of data, in which each data is compulsory and mutually exclusive, such as: Main Operator Group, Secondary Operator Group, Axis X, Axis Y, Axis Z, auxiliary systems, workpiece clamping systems, Other, and the like.

Furthermore, each OIF comprises at least a first and a second frame or text box.

The first box can be edited or filled in by a user, while the second box shows the translation in real-time into a selectable language, for example, English, of what is entered in the first box.

This real-time translation is carried out by each OIF using known automatic translation systems.

Said processing program, called BAI - Back End Artificial Intelligence, includes a dictionary and a conceptual map, capable of estimating the degree of intelligibility of the written text, i.e., it is capable of evaluating how much the text written by a user is understandable.

To this end, the BAI calculates ranking values on the degree of intelligibility, such as a t-tuple of values from 0 to 10, in which the first value refers to the "completeness of information" requirement, the second value refers to the "number of keywords" requirement, the third value refers to the "richness of the concept map generated by the text", and the like.

These ranking values are sent in real-time to each OIF.

Furthermore, each OIF receives from the BAI notifications in real time on how many keywords are present in the text entered by a user in the first box.

Furthermore, these keywords are highlighted in the text and suggested in English, if the text was not originally written in English.

In this way, the user is able to learn the correct terminology associated with a component of the machine and its possible malfunction.

The ranking values are displayed on remote devices in the form of indicators such as hand indicators, and/or avatars that change expression as intelligibility increases, and/or hourglasses or others.

The compilation of the format can be interrupted and completed at any time by means of a "submit" command.

By viewing the ranking in real-time, the user can improve the compilation of the format.

In addition, it can learn terminology and thus better report anomalies.

The system S can trace the format back to known and codified problems.

In case of said system S is not able to trace the format back to problems that are already known, the assistance service processes it and derives further cases from which instructing said system S to recognize the reported anomaly.

The remote device D1 is located in a plant of a machine user and is able to connect to said control logic unit for the compilation of the OIF.

Furthermore, said remote device D1 comprises display and interface means, by which the user can view the signals associated with the ranking values and can compile the formats.

Said device D1 can also be connected directly to the machine or system to solve the anomaly.

The operation of the system S described above is as follows.

When a user of a machine discovers a malfunction, or an anomaly, or a breakdown, he requests assistance from the assistance service associated with that particular machine.

By means of a remote device D1, it is operationally connected to the remote-control logic unit U of said assistance service.

The compilation of the format begins, according to the fields present in the OIF associated with that particular machine, then both by selecting the data by choice from the first and second list and by entering a text in the first box.

The BAI receives these data entered in the OIF and starts the calculation of the ranking values, both on the basis of the number of data entered by choice, and on the basis of the intelligibility level of the entered text.

These ranking values are displayed by the user on the display means of the remote device D1, in the form of graphic indicators or avatars that change expression or hourglasses, or other shapes.

The higher the levels of the ranking values are, and therefore higher than a certain threshold, the more the displayed signals will indicate to the user the completeness and correctness of the compilation of the format.

In this way, the user can enter more data by choice or enter more terms in the first box and choose a more precise terminology.

While entering data in text format, the user also displays possible suggested words to use and their translation into English in the second box.

After the completion of the format, if the values rankings are high, the user can send the request to the service, which can provide the user with the solution of the malfunction or failure, or anomaly.

If, on the other hand, the ranking values are low, the user can continue to fill in the format by entering more data, and then send the request to the assistance service.

As is evident from the above description, the system object of the present invention allows an operator to report failures or malfunctions or anomalies of machines and/or plants for working wooden pieces in a guided and optimized way.

Furthermore, this system allows an assistance service to receive intelligible and rapidly understandable reports, reducing the time and resources to manage the reports.

The present invention has been described for illustrative but not limitative purposes, according to its preferred embodiments, but it is to be understood that modifications and/or changes can be introduced by those skilled in the art without departing from the scope as defined in the enclosed claims.

## Claims

1. Support service management system (S) of machine and/or plants for working workpieces made of wood, glass, fiberglass, plastic, ceramic, metal, comprising:
at least one remote logic control unit (U) comprising storage means, comprising a plurality of updatable operating data of said machine and/or plants as editable cards (OIF), and processing means of said data;
at least one remote device (D1), operatively connected with said at least one remote logic control unit (U), comprising displaying and interface means that can be used by a user to input data in at least one editable card (OIF);
said system (S) being **characterized**
**in that** said processing means of said remote logic control unit (U) receive in input said at least one editable card (OIF);
**in that** said processing means comprise a processing data program (BAI) that, on the basis of the amount of data input in said at least one editable card (OIF), send signals that can be displayed by said user on said displaying means of said at least one remote device (D1) for continuing or stopping the data input in said at least one editable card (OIF).

2. System (S) according to the preceding claim, **characterized**
**in that** said processing data program (BAI) calculates ranking values associated with the amount of data input in said at least one editable card (OIF), such as a tuple of values from 0 to 10, in which each value refers to a specific requirement relative to the compilation of said at least one editable card (OIF), and
**in that** said signals, displayed on said interface means of said at least one remote device (D1), are associated with said ranking value.

3. System (S) according to any one of the preceding claims, **characterized in that** said at least one editable card (OIF) comprises:
a first list of data, in which each data is an only choice and a mutual exclusion, such as: Mechanical, Electronic, Electrical, Software, Other;
a second list of data, in which each data is an only choice and a mutual exclusion, such as: main Operating Unit, secondary Operating Unit, Axis X, Axis Y, Axis Z, auxiliary systems, blocking piece systems, Other; and
at least one first editable frame in which a user inserts data in text format.

4. System (S) according to the preceding claim, **characterized in that** said at least one editable card (OIF) comprises at least one second frame in which a real-time translation of data inserted in said first frame is provided, in a predefined language.

5. System (S) according to any one of the preceding claims, **characterized in that** said remote logic control unit (U) is placed in said support service or it is in the cloud.

6. System (S) according to any one of the preceding claims, **characterized in that** said at least one remote device (D1) can be connected to said machines and/or plants so that said user can modify its operation by means of said at least one remote device (D1).

7. System (S) according to any one of the preceding claims, **characterized in that** it comprises software modules implemented in storage means readable and executable by a computer provided with input/output devices, implemented on physical and/or virtual calculation cluster and remotely executable and implemented as applications for mobile devices, such as tablet, smartphone and laptops.

8. Operation method of a system (S), said system (S) according to any one of claims 1-7, comprising the following steps:
a. inserting data in at least one editable card (OIF);
b. calculating ranking values relative to the amount of data inserted in said step a.;
c. sending signals, corresponding to said ranking values, to a displaying unit;
d. if said signals displayed in said step c. correspond to ranking values lower than a specific threshold, then continuing the data input in said at least one editable card (OIF);
e. if said signals displayed in said step c. correspond to ranking values above a specific threshold, then stopping the data input in said at least one editable card (OIF).

9. Method according to the preceding claim, wherein said step a. comprises the following sub steps:
a.1. filling out a first list of data, in which each data is an only choice and a mutual exclusion, such as: Mechanical, Electronic, Electric, Software, Other;
a.2. filling out a second list of data, in which each data is an only choice and a mutual exclusion, such as: Main Operating Unit, Secondary Operating Unit, Axis X, Axis Y, Axis Z, auxiliary systems, blocking piece systems, Other; and
a.3 inserting data in text format in at least one first editable frame.

10. Method according to the preceding claim, wherein said step a. comprises the following sub step:
a.4 providing the real-time translation, in a predefined language, of data inserted in said first frame in said step a.3, in at least one second frame.

## Patentansprüche

1. Support-Service-Management-System (S) von Maschinen und/oder Anlagen zum Arbeiten von Werkstücken aus Holz, Glas, Glasfaser, Kunststoff, Keramik, Metall, bestehend aus:
mindestens eine logische Fernsteuereinheit (U) mit Speichermitteln, die eine Vielzahl aktualisierbarer Betriebsdaten der Maschine und/oder Anlagen als editierbare Karten (OIF) umfassen, und Mitteln zur Verarbeitung dieser Daten;
mindestens ein Ferngerät (D1), das operativ mit der mindestens einen Fernsteuereinheit (U) verbunden ist und
Anzeige- und Schnittstellenmittel umfasst, die von einem Benutzer zum Eingeben von Daten in mindestens eine bearbeitbare Karte (OIF) verwendet werden können;
wobei das System (S) charakterisiert wird dass die Verarbeitungsmittel der logischen Fernsteuereinheit (U) die mindestens eine editierbare Karte (OIF) als Eingabe empfangen;
dass die Verarbeitungsmittel ein Verarbeitungsdatenprogramm (BAI) umfassen, das auf der Grundlage der in die mindestens eine bearbeitbare Karte (OIF) eingegebenen Datenmenge Signale sendet, die vom Benutzer auf den Anzeigemitteln derselben angezeigt werden können mindestens ein Ferngerät (D1) zum Fortsetzen oder Stoppen der Dateneingabe in die mindestens eine editierbare Karte (OIF).

2. System (S) nach dem vorhergehenden Anspruch, **dadurch gekennzeichnet dass** das Verarbeitungsdatenprogramm (BAI) Rangfolgewerte berechnet, die mit der in die mindestens eine bearbeitbare Karte (OIF) eingegebenen Datenmenge verknüpft sind, beispielsweise ein Tupel von Werten von 0 bis 10, in dem sich jeder Wert auf eine bestimmte Anforderung bezieht in Bezug auf die Zusammenstellung der mindestens einen bearbeitbaren Karte (OIF) und dass die Signale, die auf den Schnittstellenmitteln des mindestens einen entfernten Geräts (D1) angezeigt werden, mit dem Rangfolgewert verknüpft sind.

3. System (S) nach einem der vorhergehenden Ansprüche, **dadurch gekennzeichnet, dass** die mindestens eine editierbare Karte (OIF) Folgendes umfasst:
eine erste Liste von Daten, in der jede Daten eine einzige Auswahl und einen gegenseitigen Ausschluss darstellt, wie zum Beispiel: Mechanik, Elektronik, Elektrik, Software, Sonstiges;
eine zweite Datenliste, in der die einzelnen Daten eine einzige Auswahl und einen gegenseitigen Ausschluss darstellen, wie zum Beispiel: Hauptbetriebseinheit, Nebenbetriebseinheit, Achse X, Achse Y, Achse Z, Hilfssysteme, Blockierstücksysteme, Sonstiges; und
mindestens einen ersten bearbeitbaren Rahmen, in den ein Benutzer Daten im Textformat einfügt.

4. System (S) nach dem vorhergehenden Anspruch, **dadurch gekennzeichnet, dass** die mindestens eine bearbeitbare Karte (OIF) mindestens einen zweiten Rahmen umfasst, in dem eine Echtzeitübersetzung der in den ersten Rahmen eingefügten Daten in einer vordefinierten Form bereitgestellt wird Sprache.

5. System (S) nach einem der vorhergehenden Ansprüche, **dadurch gekennzeichnet, dass** die ferngesteuerte Logiksteuereinheit (U) im Support-Dienst platziert ist oder sich in der Cloud befindet.

6. System (S) nach einem der vorhergehenden Ansprüche, **dadurch gekennzeichnet, dass** das mindestens eine entfernte Gerät (D1) mit den Maschinen und/oder Anlagen verbunden werden kann, so dass der Benutzer dessen Betrieb über das Gerät ändern kann mindestens ein Remote-Gerät (D1).

7. System (S) nach einem der vorhergehenden Ansprüche, **dadurch gekennzeichnet, dass** es Softwaremodule umfasst, die in Speichermitteln implementiert sind, die von einem Computer gelesen und ausgeführt werden können, der mit Eingabe/Ausgabegeräten ausgestattet ist, die auf einem physischen und/oder virtuellen Berechnungscluster und aus der Ferne implementiert sind ausführbar und als Anwendungen für mobile Geräte wie Tablets, Smartphones und Laptops implementiert.

8. Betriebsverfahren eines Systems (S), wobei das System (S) nach einem der Ansprüche 1-7 die folgenden Schritte umfasst:
a. Einfügen von Daten in mindestens eine bearbeitbare Karte (OIF);
b. Berechnen von Rangfolgewerten relativ zu der in Schritt a. eingefügten Datenmenge;
c. Senden von Signalen, die den Rangfolgewerten entsprechen, an eine Anzeigeeinheit;
d. wenn die in Schritt c. angezeigten Signale Rangordnungswerten entsprechen, die unter einem bestimmten Schwellenwert liegen, dann Fortsetzung der Dateneingabe in der mindestens einen editierbaren Karte (OIF) ;
e. wenn die im Schritt c. angezeigten Signale Rangordnungswerten über einem bestimmten Schwellenwert entsprechen, dann wird die Dateneingabe in die mindestens eine editierbare Karte (OIF) gestoppt.

9. Verfahren nach dem vorhergehenden Anspruch, wobei der Schritt a. umfasst folgende Teilschritte:
a.1. Ausfüllen einer ersten Datenliste, in der jede Daten eine einzige Auswahl und einen gegenseitigen Ausschluss darstellt, wie zum Beispiel: Mechanik, Elektronik, Elektrik, Software, Sonstiges;
a.2. Ausfüllen einer zweiten Datenliste, in der jedes Datum eine einzige Auswahl und einen gegenseitigen Ausschluss darstellt, wie zum Beispiel: Hauptbetriebseinheit, Nebenbetriebseinheit, Achse X, Achse Y, Achse Z, Hilfssysteme, Blockierstücksysteme, Sonstiges; und
a.3 Einfügen von Daten im Textformat in mindestens einem ersten bearbeitbaren Rahmen.

10. Verfahren nach dem vorhergehenden Anspruch, wobei der Schritt a. umfasst den folgenden Teilschritt: a.4 Bereitstellen der Echtzeitübersetzung der in Schritt a.3 in den ersten Rahmen eingefügten Daten in einer vordefinierten Sprache in mindestens einem zweiten Rahmen.

## Revendications

1. Système de gestion des services de support (S) de machines et/ou d'installations pour travailler de pièces en bois, verre, fibre de verre, plastique, céramique, métal, comprenant:
au moins une unité de commande logique à distance (U) comprenant des moyens de stockage, comprenant une pluralité de données de fonctionnement actualisables de ladite machine et/ou installations sous forme de cartes modifiables (GIF), et des moyens de traitement de ces données;
au moins un dispositif à distance (D1), connecté de manière opérationnelle à ladite au moins une unité de commande logique à distance (U), comprenant des moyens d'affichage et d'interface pouvant être utilisés par un utilisateur pour saisir des données dans au moins une carte modifiable (OIF);
ledit système (S) est **caractérisé en ce que** les moyens de traitement de l'unité de commande logique à distance (U) reçoivent en entrée ladite au moins une carte modifiable (OIF);
**en ce que** lesdits moyens de traitement comprennent un programme de données de traitement (BAI) qui, sur la base de la quantité de données introduites dans ladite au moins une carte modifiable (OIF), envoie des signaux qui peuvent être affichés par ledit utilisateur sur lesdits moyens d'affichage dudit au moins un dispositif à distance (D1) pour poursuivre ou arrêter l'introduction de données dans ladite au moins une carte modifiable (OIF).

2. Système (S) selon la revendication précédente, **caractérisé en ce que** ledit programme de traitement de données (BAI) calcule des valeurs de classement associées à la quantité de données introduites dans ladite au moins une carte éditable (GIF), telles qu'un tuple de valeurs de 0 à 10, dans lequel chaque valeur se réfère à une exigence spécifique relative à la compilation de ladite au moins une carte éditable (OIF), et
**en ce que** lesdits signaux, affichés sur lesdits moyens d'interface dudit au moins un dispositif à distance (D1), sont associés à ladite valeur de classement.

3. Système (S) selon l'une quelconque des revendications précédentes, **caractérisé en ce que** ladite au moins une carte éditable (OIF) comprend:
une première liste de données, dans laquelle chaque donnée est un choix unique et une exclusion mutuelle, telle que: mécanique, électronique, électrique, logiciel, autre;
une deuxième liste de données, dans laquelle chaque donnée est un choix unique et une exclusion mutuelle, par exemple: unité de commande principale, unité de commande secondaire, axe X, axe Y, axe Z, systèmes auxiliaires, systèmes de pièces de blocage, autres;
et
au moins un premier cadre modifiable dans lequel l'utilisateur insère des données au format texte.

4. Système (S) selon la revendication précédente, **caractérisé en ce que** ladite au moins une carte éditable (OIF) comprend au moins une deuxième trame dans laquelle une traduction en temps réel des données insérées dans ladite première trame est fournie, dans une langue prédéfinie.

5. Système (S) selon l'une quelconque des revendications précédentes, **caractérisé en ce que** ladite unité de commande logique à distance (U) est placée dans ledit service d'assistance ou se trouve dans le nuage.

6. Système (S) selon l'une quelconque des revendications précédentes, **caractérisé en ce que** ledit au moins un dispositif à distance (D1) peut être connecté auxdites machines et/ou installations afin que l'utilisateur puisse en modifier le fonctionnement au moyen dudit au moins un dispositif à distance D1).

7. Système (S) selon l'une quelconque des revendications précédentes, **caractérisé en ce qu'**il comprend des modules logiciels mis en œuvre dans des moyens de stockage lisibles et exécutables par un ordinateur doté de dispositifs d'entrée/sortie, mis en œuvre sur une grappe de calcul physique et/ou virtuelle et exécutables à distance et mis en œuvre sous forme d'applications pour des dispositifs mobiles, tels que des tablettes, des smartphones et des ordinateurs portables.

8. Méthode d'exploitation d'un système (S), ledit système (S) selon l'une quelconque des revendications 1-7, comprenant les étapes suivantes:
a. insérer des données dans au moins une carte modifiable (OIF);
b. calculer les valeurs de classement relatives à la quantité de données insérées à l'étape a.;
c. envoyer des signaux, correspondant à ces valeurs de classement, à une unité d'affichage;
d. si les signaux affichés à l'étape c. correspondent à des valeurs de classement inférieures à un seuil spécifique, poursuivre la saisie des données dans ladite au moins une carte éditable (OIF);
e. si les signaux affichés à l'étape c. correspondent à des valeurs de classement supérieures à un seuil spécifique, arrêter l'entrée de données dans au moins une carte éditable (OIF).

9. Méthode selon la revendication précédente, dans laquelle ladite étape a. comprend les sous-étapes suivantes:
a.1. remplir une première liste de données, dans laquelle chaque donnée est un choix unique et une exclusion mutuelle, comme par exemple: mécanique, électronique, électrique, logiciel, autre;
a.2. remplir une deuxième liste de données, dans laquelle chaque donnée est un choix unique et une exclusion mutuelle, par exemple: mécanique, électronique, électrique, logiciel, autre: unité de commande principale, unité de commande secondaire, axe X, axe Y, axe Z, systèmes auxiliaires, systèmes de pièces de blocage, autres; et
a.3. insérer des données sous forme de texte dans au moins un premier cadre modifiable.

10. Procédé selon la revendication précédente, dans lequel ladite étape a. comprend la sous-étape suivante: a.4 fournir la traduction en temps réel, dans une langue prédéfinie, des données insérées dans ladite première image à l'étape a.3, dans au moins une deuxième image.
